(19) Europäisches Patentamt
European Patent Office
Office européen des brevets

(11) **EP 4 054 349 B1**

(12) **EUROPEAN PATENT SPECIFICATION**

(45) Date of publication and mention
of the grant of the patent:
**28.08.2024 Bulletin 2024/35**

(21) Application number: **20797488.2**

(22) Date of filing: **30.10.2020**

(51) International Patent Classification (IPC):
*A23K 40/25* [(2016.01)]    *A23K 50/42* [(2016.01)]
*A23L 2/39* [(2006.01)]    *A23L 2/44* [(2006.01)]
*B01J 2/20* [(2006.01)]    *B29B 9/06* [(2006.01)]
*A23L 7/10* [(2016.01)]    *A23P 10/20* [(2016.01)]
*A23P 30/20* [(2016.01)]

(52) Cooperative Patent Classification (CPC):
**A23L 7/115; A23K 40/25; A23K 50/42; A23L 2/39;
A23L 2/44; A23P 10/20; A23P 30/20; B01J 2/20;
B29B 9/06**

(86) International application number:
**PCT/EP2020/080595**

(87) International publication number:
**WO 2021/089442 (14.05.2021 Gazette 2021/19)**

(54) **EXTRUDED FOOD PRODUCT COMPRISING BRAN AND MANUFACTURING PROCESS**

EXTRUDIERTES LEBENSMITTEL MIT KLEIE UND HERSTELLUNGSPROZESS

PRODUIT ALIMENTAIRE EXTRUDÉ COMPRENANT DU SON ET PROCÉDÉ DE FABRICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.11.2019 EP 19206890**

(43) Date of publication of application:
**14.09.2022 Bulletin 2022/37**

(73) Proprietor: **Société des Produits Nestlé S.A.
1800 Vevey (CH)**

(72) Inventors:
• **CHANVRIER, Hélène,Michèle,Jeanne
1350 Orbe (CH)**
• **HENRION, Muriel
1350 Orbe (CH)**

(74) Representative: **Elleby, Gudrun
Société des Produits Nestlé S.A.
Avenue Nestlé 55
1800 Vevey (CH)**

(56) References cited:
**WO-A1-2016/091955    WO-A1-2017/097499
US-A1- 2009 053 379    US-A1- 2014 079 786**

## Description

The present invention relates generally to the manufacture of extruded food products comprising bran, such as granulates. In particular, the extruded food-grade granulates are bran granulates which may be obtained by direct cutting from the extrude. The bran granulates may be used as an agent for improving shelf-life of a dry food product

## BACKGROUND OF THE INVENTION

Cereal porridges are a popular breakfast food and have been manufactured for several years. Traditionally, cereal porridges are made from cereal flour or rolled grain, such as oat, corn, rice, wheat or millet flour. The traditional porridges require a comparatively long preparation time, in particular soaking and/or cooking. The food industry proposes dry cereal compositions that may be reconstituted into a porridge. In addition to cereal flakes or pellets, such compositions may include sugars, salts, oils and other flavourings, colouring and preservation agents, vitamins and mineral fortifiers. Reconstitution of such porridges may be performed much faster than traditional porridges, simply by adding milk or water, hot or cold.

Cereal flakes may be manufactured by an extrusion process which combines mixing, cooking, kneading, shearing and forming. Typically, raw materials are fed into an extruder barrel and a screw conveys the raw materials along the barrel. The raw materials undergo heating, compression and mixing to form a thermoplastic mass. The raw materials are then extruded out of the extruder barrel into strands or ropes, which are cut into pellets. The pellets are then dried, they may be flaked with a flaking roller, and toasted. The toasting process sometimes causes a slight expansion of the flakes or a curling of the flakes.

US2009053379 A1 discloses a cereal bran granule, which is produced by granulating powder composition comprising cereal bran powder, the cereal bran powder is one, two or more kinds of cereal bran powder selected from the group consisting of wheat bran powder, oat bran powder and barley bran powder.

US 7524178 discloses an extrusion device equipped with a cutting head which makes it possible to increase the rate of production of granular products. However, due to its structure, the cutting head it quite sensitive, from an industrial standpoint, to deformation. The cutting head requires regular maintenance, such as balancing to guarantee dynamic equilibrium in operation, and sharpening of the cutting blades. This structure also imposes limits on the rotation speed of the cutting head.

It would therefore be desirable to provide a device that makes it possible to further increases the rate of production of granular products, in particular by removing or reducing the maintenance or dynamic equilibrium issues.

Alternatively, cereal flakes are made by a roller-drying process which combines preparing a slurry, cooking, drying, and milling. Typically, raw materials are mixed into a container, fed onto the surface of a cooking and drying roller, the cooked sheet is detached from the roller, dried and milled to the desired particle size.

US 4044159 discloses a ready-to-eat extruded cereal product. The only example from this document proposes extruded flakes of about 0.015 inches thickness (about 0.038 mm) which are then conveyed into a mill. This two-step technology is known for the manufacture of milled cereal flakes. Neither the structural properties of the flakes nor their reconstitution properties are disclosed.

EP 3079494 discloses food-grade flakes having a porosity of between 50% and 90%, a mean wall thickness of between 30 and 90 microns, a thickness of between 0.5 and 2 mm, a length of between 2 and 8 mm, a liquid absorption index of between 100 and 600 g liquid/100 g of flakes, and their manufacturing process.

EP 3073841 discloses food-grade flake having a porosity of between 40% and 70%, a mean wall thickness of between 100 and 180 microns, a thickness of between 0.5 and 2 mm, a length of between 2 and 8 mm, a liquid absorption index of between 80 and 200 g liquid/100 g of flakes.

The flakes may still require a few minutes to reconstitute into a porridge. The reconstitution time may be improved by grinding the flakes coarsely. But this means adding a further step to the industrial process, which means a more complex industrial setup.

It would therefore be desirable to provide an equipment and a process for manufacturing a dry cereal composition with even fewer industrial steps, and so that the composition has a very short reconstitution time.

Any reference to prior art documents in this specification is not to be considered an admission that such prior art is widely known or forms part of the common general knowledge in the field.

## SUMMARY OF THE INVENTION

The object of the present invention is to improve the state of the art, and in particular to provide a process for manufacturing bran granulates, and bran granulates that overcomes the problems of the prior art and addresses the needs described above, or at least to provide a useful alternative.

The inventors were surprised to see that the object of the present invention could be achieved by the subject matter of the independent claims. The dependent claims further develop the idea of the present invention.

According, the invention proposes bran granulates having an average area diameter D[4, 3] of from 200 to 1500 $\mu$m, a porosity of from 35% to 55%, a mean wall thickness of from 9 to 20 $\mu$m, the mean wall thickness being the average thickness of pores of granulates as measured using x-ray tomography, and having a viscosity ratio Visco10min / Visco2min $\leq$ 1, said granulates comprising at least 50% by weight of bran, preferably at least 80% by weight of bran, and wherein the bran is cereal bran or pseudo-cereal bran, and wherein the granulates consist of 100% dry matter by weight of bran, wherein the Viscosity is measured in a mix of 20% by weight of said granulates in 80% by weight of water, at 50°C, at a shear rate of 50 rpm, after 2 minutes (Visco2min) and 10 minutes (Visco10min) at this shear rate, with a rheometer comprising a canister equipped with a standard paddle.

In particular, the bran granulates may have:

- an average area diameter D[4, 3] of from 300 to 1000 $\mu$m, preferably from 400 to 900 $\mu$m,
- a porosity of from 36% to 39%, or from 41% to 49%, preferably 41% to 46%, or from 51% to 55%,
- a mean wall thickness of from 9 to 15 $\mu$m, preferably from 9 to 13 $\mu$m, more preferably from 9 to 11 $\mu$m.

The granulates consist of 100% dry matter by weight of bran. The bran is cereal bran or pseudo-cereal bran. The bran may be selected from wheat bran, corn bran, oat bran, sorghum bran, millet bran, barley bran, or mixtures thereof.

The bran granulates which are obtainable by a cooking-extrusion process, preferably a double cooking-extrusion process, most preferably a process that does not comprise a milling step downstream of the cutting step.

The invention also proposes a dry food composition which comprises bran granulates as mentioned above, wherein the dry food composition is an infant cereal product, an adult cereal product, a dehydrated sauce, a dehydrated soup, a dehydrated dish, a reconstitutable beverage, or a dehydrated pet food.

Advantageously, the granulates are used as an agent for improving shelf-life of said food product.

The invention also proposes the use of the bran granulates as mentioned above, as an agent for improving shelf-life of a dry food product. In particular, the dry food product is a packaged dry food product, and the packaging material does not comprise plastic, preferably wherein the packaging material is paper. For instance, the bran granulates are used as an antioxidant agent or to protect said dry food from moisture uptake.

The invention also proposes a process for manufacturing bran granulates as mentioned above, wherein said process comprises:

(a) mixing a bran material with water in an extruder to form a dough comprising 100% by weight of bran material;
(b) cooking the dough in the extruder at a temperature comprised from 110°C to 160°C, preferably from 120°C to 140°C, and at a water content comprised between 20% and 40% by weight of the dough;
(c) extruding the dough through an extrusion die (2);
(d) cutting the dough into granulates directly at the outlet of the extrusion die (2), at a turbine cutting speed Vtur of between 20 m/s and 120 m/s and at an extrudate length Lpr of between 0.05 mm and 0.5 mm with a rotationally-driven granulating turbine (5), to obtain a first granulated product; and
(e) drying the granulated product to a water content below 8%.

Preferably, the process is a "double-extrusion" process, wherein steps (b), (c) and (d) are repeated to the first granulated product before drying, to obtain a second granulated product, and the second granulated product is dried to a water content below 8%.

The dough consists of bran material and water.

These and other aspects, features and advantages of the invention will become more apparent to those skilled in the art from the detailed description of embodiments of the invention, in connection with the attached drawings.

**BRIEF DESCRIPTION OF THE DRAWINGS**

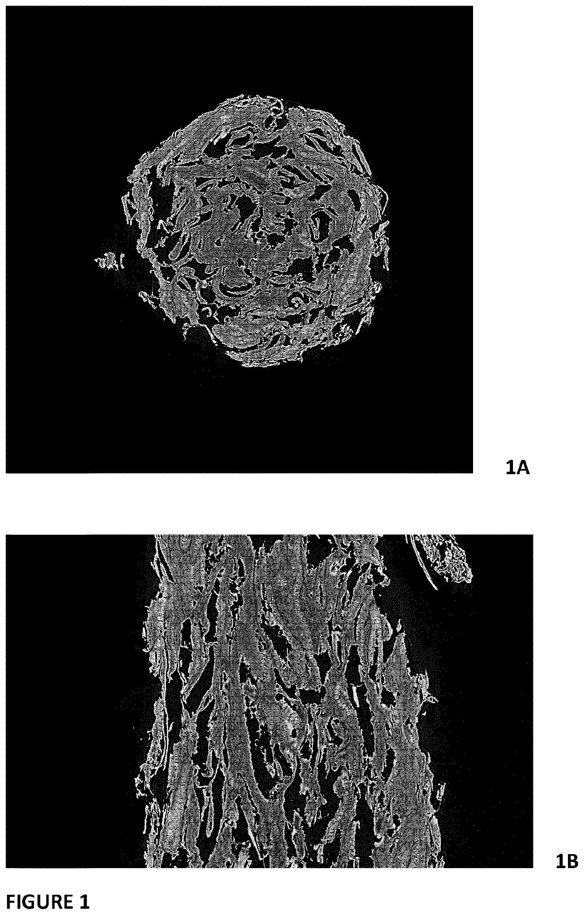

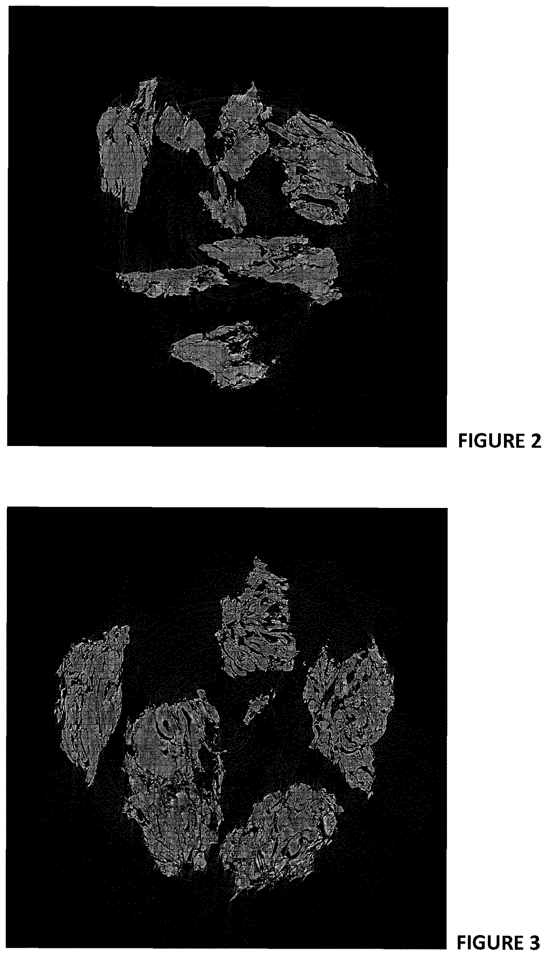

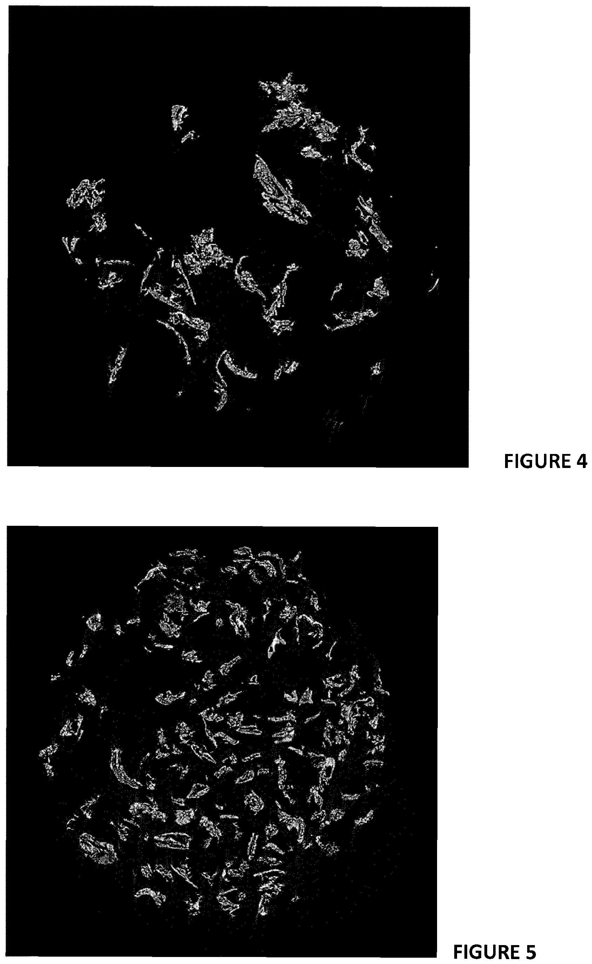

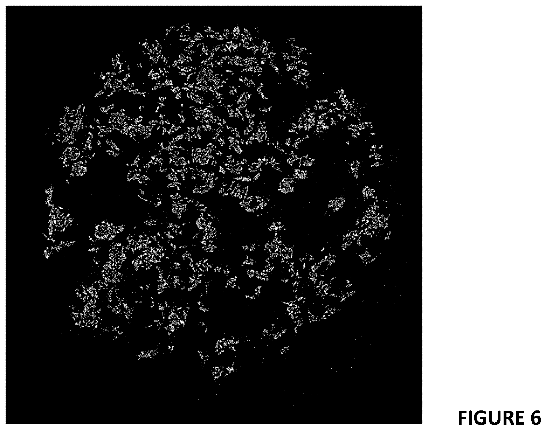

Figures 1 to 6 show the structure of several products observed by X-ray tomography:

Figure 1: extruded rope of bran of example A; 1A cross-section, 1B longitudinal cut
Figure 2: granulates obtained after milling of the extruded rope of example A
Figure 3: particles of example B after milling
Figure 4: direct bran granulates of example C
Figure 5: direct bran granulates of example D
Figure 6: direct bran granulates of example F

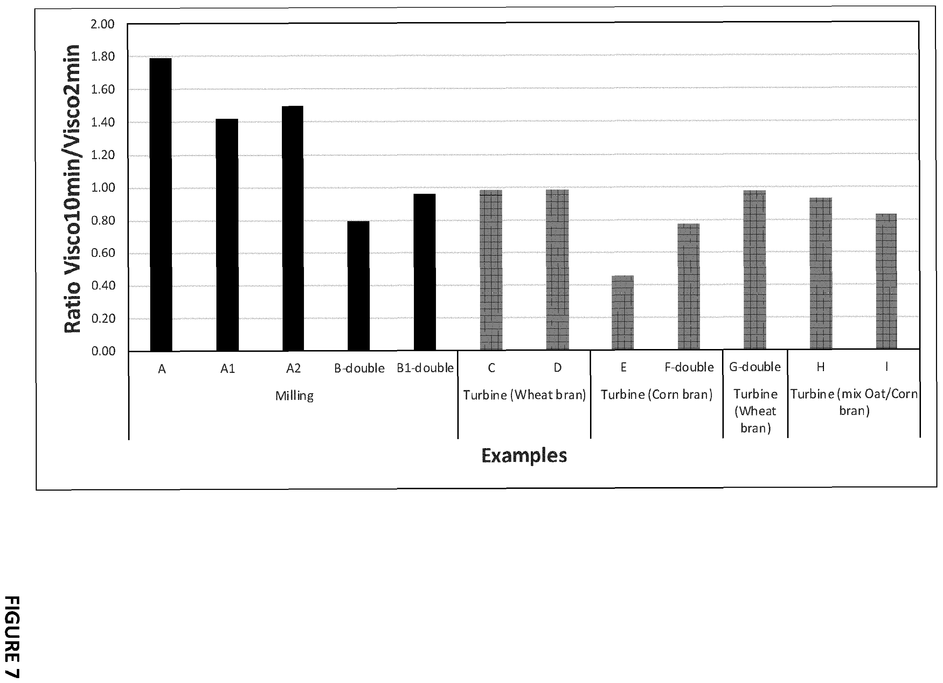

Figure 7 shows the ratio Visco10min/Visco2min for the products of examples A and B (milled extruded bran wheat bran), C and D (direct granulates from wheat bran), E and F (direct granulates from corn bran), G (double-extruded direct granulates from wheat bran) and finally H and I (direct granulates from Oat/Corn mix 50/50).

Figure 8 shows Hexanal measured after 5 months at 40°C plotted against soluble ferulic acid in the bran granulates of the invention in comparison to native bran.

Figure 9 is a simplified part view in cross section of an extruder equipped with a cutting head, as described in US 7524178.

Figure 10 is a perspective view of a granulating head according to the invention in front of the extrusion face of an extrusion die.

Figure 11 is a perspective view of a granulating head according to the invention, viewed from the front.

Figure 12 is a front view of the granulating head of Figure 11.

Figure 13 is a partial perspective view in cross-section of a granulating head according to the invention in front of an extrusion die.

Figure 14 is a partial perspective view of an embodiment of a fin.

Figure 15 is schematic cross-section view of a fin in front of an extrusion hole with extruded mass.

Figure 16 is a schematic view of a granulating turbine according to the invention in operation.

## DETAILED DESCRIPTION OF THE INVENTION

As used in the specification, the words "comprise", "comprising" and the like are to be construed in an inclusive sense, that is to say, in the sense of "including, but not limited to", and do not exclude additional, unrecited elements or method steps. As used in the specification, the words "consist of", "consisting of" and the like are to be construed in an exclusive or exhaustive sense: they exclude any unrecited elements or method steps. As used in the specification, the words "consists essentially of", "consisting essentially of" and the like are to be construed in the sense that further elements or method steps may be present provided they do not materially affect the essential characteristics of the invention.

As used in the specification, the singular forms "a", "an", and "the" include plural referents unless the context clearly dictates otherwise.

Unless noted otherwise, all percentages in the specification refer to weight percent, where applicable.

Unless defined otherwise, all technical and scientific terms have and should be given the same meaning as commonly understood by one of ordinary skill in the art to which this invention belongs.

### Extruder and granulating turbine

The granulating turbine was first described in co-pending European patent application EP 19151502, which is fully incorporated therein.

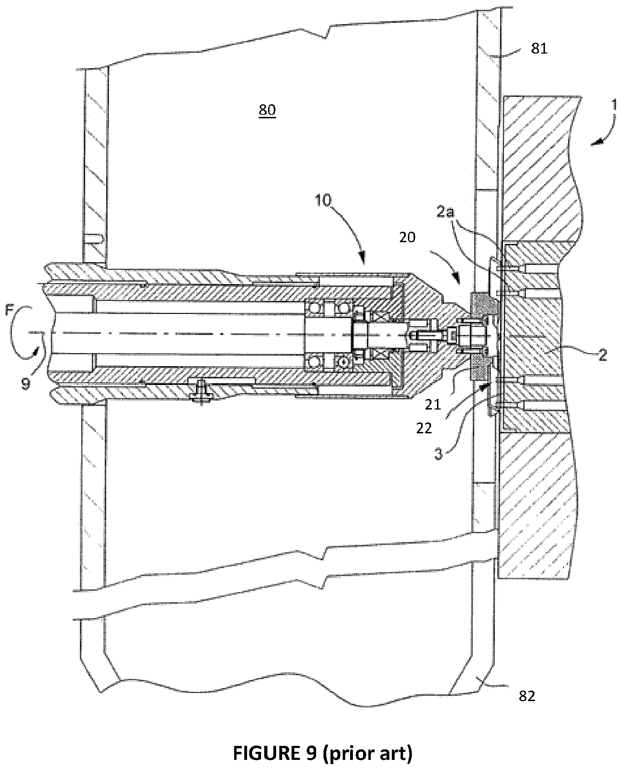

With reference to Figure 9, which shows a simplified part view in cross section of a prior-art extruder, an extruder 1 of known type comprises, at its exit, at least one extrusion die 2 the orifices 2a of which are distributed in two circles in this example, and open onto a flat surface 3 known as the extrusion face. Facing this surface 3 there is a rotary cutting head 20 provided with cutters 22 arranged in such a way as to cut the ropes of extruded substance leaving the die 2. The cutters 22 are mounted on a support 21.

The cutting head 20 lies inside an evacuation chamber 80 which may be designed to be kept at a sub-atmospheric pressure by virtue of a vacuum pump (not depicted). The enclosure of this chamber is depicted schematically by a peripheral wall 81 and a lower hopper 82 into which the granular products manufactured by the device described here drop and are collected by means of an extractor allowing the vacuum in the chamber 80 to be maintained, if required. The seal between the extruder 1 and the wall 81 is afforded by means which have not been depicted.

The cutting head 20 rotates, in the direction of the arrow F, about an axis 9 perpendicular to the face 3 of the extruder. It is mounted on the end of a shaft 10 the other end of which is coupled to the shaft of an electric motor (not depicted).

In operation, the motor turns the shaft 10 and the cutting head 20 at an adjustable speed which may for example range up to 5 000 revolutions per minute ("rpm"). The pasty product extruded in the hot state by the extruder 1 forms, as it leaves each orifice 2a of the die 2, a rope which is immediately cut by the cutters 22 into pieces. As the extruded product contains water vapour and possibly other gases, the pieces swell in the evacuation chamber 80 and solidify in the form of grains which drop into the hopper 82. The size, shape and rate of manufacture of the pieces can be adjusted by, for example, adjusting the speed of the extruder 1, the speed of the motor, or the pressure in the chamber 80.

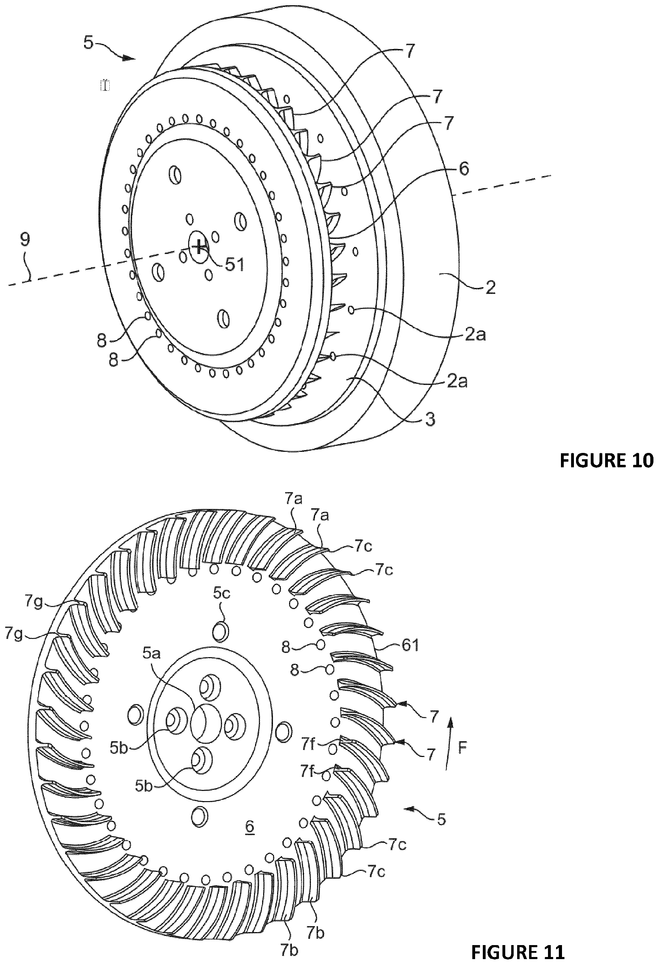

According to an aspect of the invention, the cutting head 20 shown in Figure 9 is replaced with a granulating turbine 5, as shown in Figures 10 to 14, which results in a device for manufacturing a granular food product by extrusion and granulating. The device comprises an extruder. Extruders are conventional equipment in the food and feed industry. The extruder may be a single-screw or a twin-screw extruder. The extruder has a least one extrusion die 2 comprising an extrusion face 3 in which a plurality of extrusion orifices 2a open and a granulating turbine 5 positioned facing the extrusion face. The granulating turbine will be described in more details below. The granulating turbine 5 may be driven rotationally about an axis 9 perpendicular to the extrusion face 3 such that, when driven rotationally, the fins 7 pass about the extrusion orifices 2a. The trajectory of the fins 7 overlaps the extrusion orifices 2a.

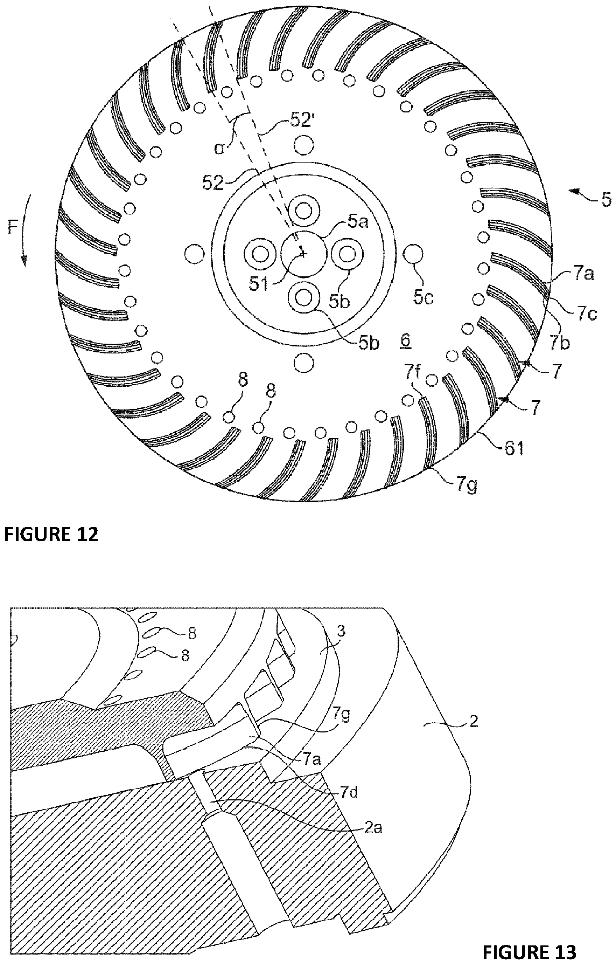

Figures 11 and 12 show a granulating turbine 5. The granulating turbine 5 has a front face 6 and a plurality of fins 7 integral with and extending from the front face 6. Each fin 7 has a lead face 7a, a trail face 7b and a clearance face 7c. The clearance face 7c is parallel to the front face 6. When installed at the outlet of the extruder, the front face 6 faces the extrusion face 3. The front face 6 of the granulating turbine 5, the extrusion face 3 of the extrusion die 2 and the clearance faces 7c of the fins 7 are parallel. The lead face 7a intersects the clearance face 7c at a cutting edge 7d. The trail face 7b intersects the clearance face 7c at a trail edge 7e.

The fins 7 are not welded, screwed or otherwise attached to the front face 6 of the turbine 5. For instance, the turbine 5 is manufactured as a single piece. In addition, the fins 7 extend from the front face 6, which provides more structural rigidity to the granulating turbine 5, when compared with a cutting head 20 shown on Figure 9.

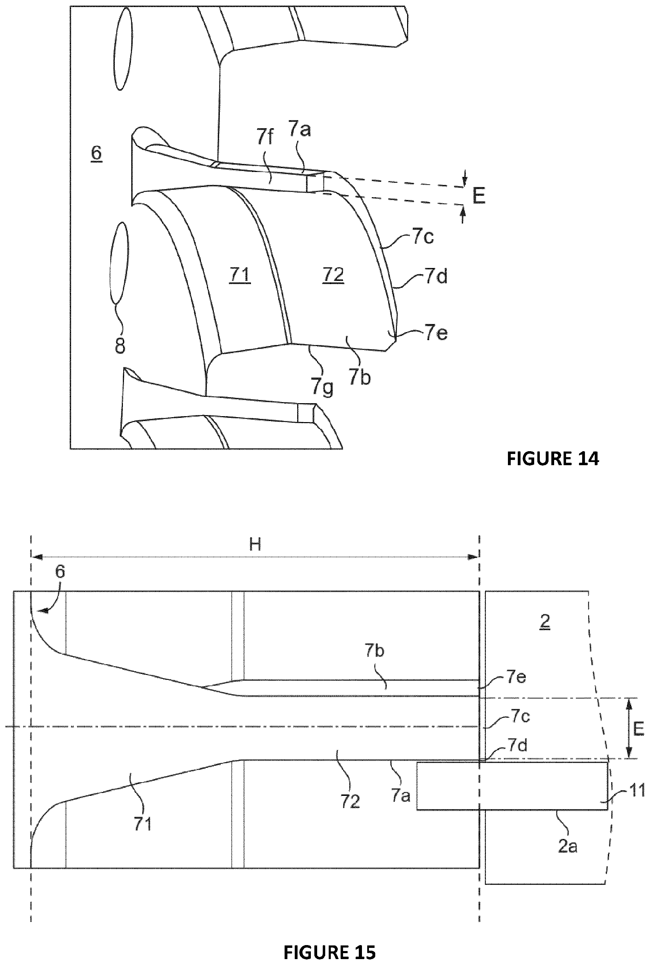

As shown on Figures 14 and 15, each fin 7 has a cross-sectional profile. Starting from the front face 6, along the height H of a fin 7, the cross-sectional profile has a base 71 and a tip 72. The base 71 tapers down from the front face 6 of the granulating turbine 5 to about 1/3 to 2/3 of its height H, and the tip 72 has a substantially constant thickness E and extending from the top of the base 71 to the clearance face 7c.

Preferably all the fins 7 have substantially the same height H, although fins having different heights could also be envisaged. When all the fins 7 have the same height, homogeneous bran granulates may be obtained. When fins 7 have different heights, the structure and size of the resulting bran granulates will be heterogeneous, which may also be interesting considering that the structure and the size of the bran granulates have an impact on the reconstitution and mouthfeel of the product. If the fins 7 have different heights among each other, they should be distributed on the granulating turbine 5 in a manner to balance centrifugal forces when the granulating turbine 5 is in operation.

In an embodiment, the fins 7 extend substantially perpendicularly from the front face 6.

As shown on Figures 11 and 12, the fins 7 have a front-view profile extending between an inner face 7f and an outer face 7g. The inner face 7f is closer to the rotation centre 51 of the granulating turbine 5 than the outer face 7g. As shown in the Figures, the outer face 7g is radially offset from the inner face 7f by an angle $\alpha$. For instance on Figure 12, a radius 52 is shown between the rotation centre 51 and the inner face 7f of a fin 7, and a radius 52' is shown between the rotation centre 51 and the outer face 7g of the same fin 7, to exhibit the radial offset $\alpha$ between the inner face 7f and the outer face 7g.

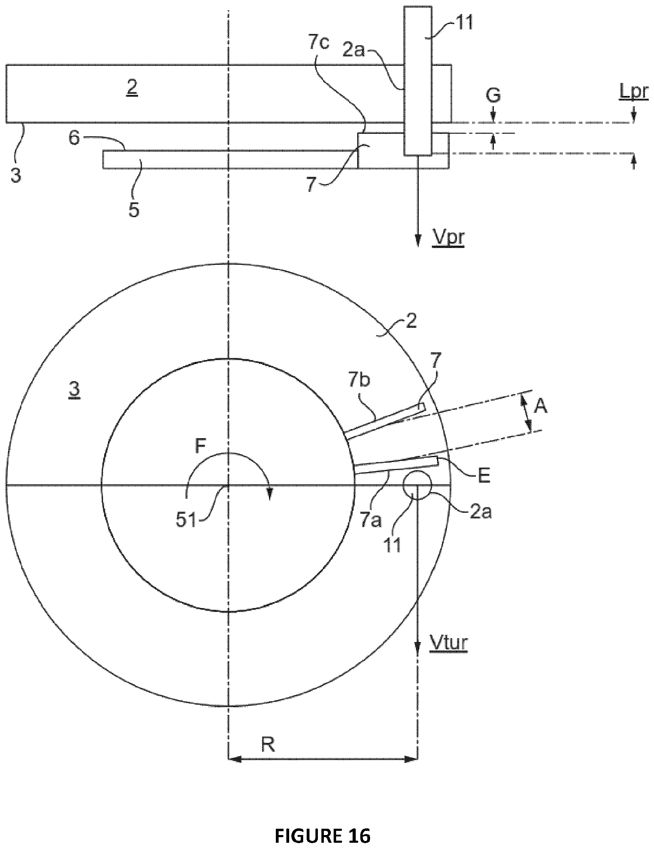

Alternatively, the outer face 7g of a fin 7 may be radially aligned with the inner face 7f as shown for instance at the bottom of Figure 16.

The front-view profile of a fin 7 may be straight, between the inner face 7f and the outer face 7g, or curved, for instance an arc of a circle. A curved front-view profile is not, for instance, wavy. Preferably, the front-view profile of the fins 7 extends along an involute of a circle between the inner face 7f and the outer face 7g. Such a profile improves ejection of the granulates from the granulating turbine 5. Preferably, the height H of the fins 7 is constant along the front-view profile.

Preferably, the fins 7 are arranged on a periphery of the front face 6, for instance in a peripheral row. As shown on Figure 12, the inner 7f faces of the fins 7 are arranged on an inner circle of the front face 6, and the outer 7g faces of the fins 7 are arranged on an outer circle of the front face 6. The inner circle and the outer circle are concentric. Preferably, the outer circle is proximate to the periphery 61 of the front face 6 of the granulating turbine 5. Preferably, the fins 7 are evenly distributed on a periphery of the front face 6.

The granulating turbine 5 may further comprise through holes 8. The through holes 8 are arranged between the rotation centre 51 of the granulating turbine 5 and the fins 7, preferably between two consecutive fins 7. The through holes may be arranged on a circle of the front face 6, preferably they are evenly distributed. Preferably, there are as many through holes 8 as there are fins 7. The through holes 8 allow air to flow from the back of the granulating turbine 5 to the front face 6. This improves ejection of the granulates from the granulating turbine 5.

The granulating turbine may comprise one peripheral row of fins 7. For instance, the row comprises from 9 to 40 fins, for instance the row comprises 9, 12, 15, 18, 20, 24, 30, 36 or 40 fins.

The granulating turbine 5 also has a through hole 5a at the centre of the front face 6 and through holes 5b arranged proximate to the centre of the front face 6 which cooperate with a standard mechanical connection (not shown) with the shaft 10 (shown on Figure 9).

A granulating turbine 5 may be removed easily for maintenance or to replace it with another model of granulating turbine 5. In addition, the granulating turbine 5 may also have maintenance through holes 5c which may cooperate with a protection tool (not shown). The protection tool comprises a plate having the same diameter as the front face 6. The back of the plate is equipped with two handles. The front of the plate faces the front face 6. The protection tool may be attached to the granulating turbine 5 in cooperation with the maintenance holes 5c, which protects the fins 7 and the front face 6 from damage. It also protects users from the potentially sharp edges 7d, 7e of the fins 7.

**Bran granulates, food composition and manufacturing method**

The granulating turbine opens the possibility to manufacture bran granulates, i.e. food products rich in bran, which have a pleasant texture after reconstitution in water or milk for instance. Products rich in bran, or bran-rich products, contain at least 50% by weight of bran. Usually, products rich in bran are rather gritty with an unpleasant mouthfeel after reconstitution. The inventors have found that, thanks to the granulating turbine, it is possible to manufacture bran grade granulates, directly from an extruder, without the need for a downstream milling, and which have a pleasant mouthfeel after reconstitution.

The bran granulates are not flakes or pellets. They are closer to a powder than to flakes or pellets, which makes it easier to handle in an industrial setting, in operations such as pumping, conveying, dosing, or mixing. Contrary to flakes or pellets, it is not necessary to mill the bran granulates to improve their reconstitution properties. Also, the bran granulates are easy to use for consumers and they provide textures which were not previously available when using flakes or pellets, with a short reconstitution time. It is also possible to better adapt the nutritional properties of the granulates, for instance by increasing the fibre content or reducing the sugar content.

As used herein, "bran granulates" refers to a product comprising 100% by weight of bran, having a porous structure and a delicate crisp texture due to the cutting and drying of the granulates. It is understood that the apparatuses and methods of the present disclosure can also be used to produce similar foods from a direct extrusion process, such as other carbohydrate-based edible products. "Pellets" refers to extruded balls. "Milled pellets" refers to pellets that are granulated by a downstream processing of milling. "Direct granulates" refers to extruded products that are cut directly as they exit an extruder, as discussed below, meaning that the granulates are produced in a single operation without downstream milling. "Reconstitution" refers to the addition of a liquid to cereal granulates. "Porridge" refers to the product obtained after the addition of liquid to the granulates. Preferably, no free liquid is left after reconstitution. For instance, a porridge is a hydrated cereal mass after reconstitution. The texture of the porridge varies depending on the bran granulates and can go from smooth to heterogeneous or semolina/grainy or flaky. "Porosity" refers to the ratio of the volume of empty spaces (cells) versus the full volume of a product, as explained in the Methods section. "Mean wall thickness" refers to the average thickness of the pores of the pellets, milled pellets and/or direct granulates as measured using x-ray tomography, and as explained in the Methods section.

The invention proposes bran granulates having an average area diameter $D[4, 3]$ of from 200 to 1500 $\mu$m, a porosity of from 35% to 55%, a mean wall thickness of from 9 to 20 $\mu$m and having a viscosity ratio Visco10min/Visco2min $\leq$ 1. The average area diameter, the porosity and the mean wall thickness are defined in the Methods section below. The exact method for measuring viscosity is not absolutely essential because the relevant feature is the ratio between the viscosity at 10 minutes and the viscosity at 2 minutes, measured using the same conditions. For the sake of clarity, the method for measuring viscosity is also defined in the Methods section below.

The bran granulates are a dry particulate product. This may be acknowledged in particular in view of the average area diameter $D[4, 3]$ of the bran granulates. Preferably, the average area diameter $D[4, 3]$ of the bran granulates ranges from 200 to 1500 $\mu$m, preferably from 300 to 1200 $\mu$m and more preferably from 400 to 900 $\mu$m.

Without wishing to be bound by theory, the inventors believe that the porosity of the granulates allows to obtain aerated and less dense bran granulates, which helps the absorption of water or liquid when the bran granulates are mixed with water or another liquid. Preferably, the porosity of the granulates ranges from 35% to 55%, such as from 35% to 39%, or from 41% to 49%, preferably from 41% to 46%, or from 51% to 55%.

Without wishing to be bound by theory, the inventors believe that thin walls allow a faster diffusion of the liquid within the granulates. Thus, a lower mean wall thickness of the granulates may be positively correlated with a faster water absorption. From the point of view of the end-user, this would translate into a fast, if not instant, reconstitution of a food product when the bran granulates are mixed with water or another liquid. Preferably, the mean wall thickness of the granulates ranges from 9 to 20 $\mu$m, preferably from 9 to 15 $\mu$m, and more preferably from 9 to 13 $\mu$m.

The granulates consist of 100% dry matter by weight of bran. In other words, the only constituent, apart from water, is bran. After extrusion and drying, there may remain residual water in the granulates, for instance up to 8% by weight of the granulates.

The bran is cereal bran or pseudo-cereal bran. For instance, the bran is selected from wheat bran, corn bran, oat bran, sorghum bran, millet bran, barley bran, or mixes thereof. Preferably, the bran is selected from wheat bran, corn bran or oat bran, or mixes thereof. For instance, the bran comprises 1 to 5 parts by weight of corn bran and 1 to 5 parts by weight of oat bran, such as the same amounts of corn bran and oat bran. Alternatively, the bran comprises corn bran, oat bran and wheat bran in various proportions. Alternatively, the bran consists of wheat bran, or of corn bran, or of oat bran.

The bran granulates are obtainable by a cooking-extrusion process, preferably a process that does not comprise a milling step downstream of the cutting step. The process for manufacturing the bran granulates comprises several steps: a) mixing a bran material with water in an extruder to form a dough; b) cooking the dough, c) extruding the dough, d) granulating the dough into pieces and expanding the pieces, and e) drying the pieces.

In an embodiment, the invention proposes a process for manufacturing bran granulates. The process comprises:

(a) mixing a bran material with water in an extruder to form a dough;
(b) cooking the dough in the extruder at a temperature comprised from 110°C to 160°C and at a water content comprised from 20% to 40% by weight of the dough;
(c) extruding the dough through an extrusion die (2);
(d) cutting the dough into granulates directly at the outlet of the extrusion die (2), at a turbine cutting speed Vtur of from 20 m/s to 120 m/s and at an extrudate length Lpr of from 0.05 mm to 0.5 mm with a rotationally-driven granulating turbine (5) to obtain a first granulated product;
optionally applying steps (b), (c) and (d) to the first granulated product, to obtain a second granulated product; and
(e) drying the second granulated product to a water content below 8%.

In this process, the dough comprises 100% by weight of bran material. Preferably, the remainder is water.
The parameters used to compute Lpr and Vtur are illustrated on Figure 16. The bottom of the Figure 16 shows a schematic view of the extrusion face 3 of the die 2 superposed with a schematic view taken between the front face 6 of the turbine 5 and the fins 7.
The speed of the fins 7 when they impact the extruded product 11, or turbine cuttings speed Vtur is given by the following equation:

$$Vtur = \frac{2\pi \times RPM \times R}{60 \times 1000}$$

where

- R is the radius between the rotation centre 51 and the position of the extrusion holes 2a
- RPM is the radial rotation speed (revolution per minute) of the granulating turbine 5

The length Lpr of the extrudate before expansion may be estimated as follows:

$$Lpr = (Vpr \times 1000)/(RPM/60)/NF$$

where

- G is the clearance between the extrusion face 3 and the clearance face 7c of the fins 7
- Vpr is the speed of extrusion of the melt 11 at the extrusion hole 2a
- NF is the number of fins of the granulating turbine 5, which may be estimated as:

$$NF = 2\pi \times \frac{R}{A + E}$$

where:

- E is the thickness of the fins 7
- A is the distance between the lead face of a fin and the trail face of the next fin, in the direction of rotation, at the position of the extrusion hole 2a

In an embodiment, granulating may be performed under sub-atmospheric pressure, for instance at a pressure of 20 mbar.
For instance, a dry or moist bran material mix is fed into an extruder, or cooked-extruder. The ingredient mix includes 100% bran as solid material and water. The cooker-extruder usually comprises several successive barrels equipped with a screw (single or twin). The dry mix is typically fed into the first barrel. After feeding the dry mix into the first barrel, the ingredient mix may be further mixed in a first mixing section of the extruder, to obtain a dough. Water is added by injection in the first or the second barrel, to reach a water content comprised from 20% to 40%. The dough is heated and cooked at a temperature from 110°C to 160°C, preferably from 120°C to 140°C, compressed and sheared so that it forms a cooked thermoplastic mass. This cooked thermoplastic mass is sometimes referred to as a melt 11. Under these conditions, the material melts due to the combination of mechanical friction between the screw and the thermal energy given through the barrel. The melt 11 is then conveyed to the extrusion die 2 where it is subjected to pressure.

The thermoplastic mass may be extruded by having it pushed by an extruder screw or twin screw through the extrusion holes 2a of the extrusion die 2. As the thermoplastic mass is forced through the narrow die, it can be followed by a sudden release of pressure that leads to a rapid evaporation of steam. Preferably, the diameter of the extrusion holes 2a of the extrusion die 2 is lower than 4 mm, preferably comprised from 2 mm to 4 mm.

As the dough exits the extruder through the extrusion die, the mass is cut into granulates by the granulating turbine 5 driven rotationally.

The inventors have found that the granulating turbine 5 may be driven clockwise or counter-clockwise, and that it applies whether the fins 7 are straight (radially or offset) or curved. When the front-view profile of the fins 7 is curved, such as an involute of a circle, ejection of the granulates is improved when the granulating turbine 5 is driven counter-clockwise, as shown on Figure 12 for instance, with the offset $\alpha$ between the inner face 7f and the outer face 7g is a clockwise offset.

The thermoplastic mass 11, or dough, is granulated at a length Lpr and speed Vtur that depends on the rotation speed of the granulating turbine 5 and on its structure.

The granulating turbine 5 and extrusion die 2 are positioned within a chamber 80. As the granulating turbine 5 rotates and cuts the granulates directly off the die, the granulates fall down the chamber 80 into a hopper 82 for collection.

The granulates may then be dried. The drying step can be carried out using an infrared (IR) heater or by hot-air drying. Typically, the product is placed on a mesh wire belt which goes through an IR drying machine, such that IR radiations occur from above and below the product. The drying step typically reduces the water content of the product from about 15% to a moisture content of about 1 to 6.5%. Typically, the final granulates are dried to a final residual water content of from 2% to 8%.

Preferably, the first granulated product is collected before drying and undergo a second extrusion, for instance in the same processing conditions as the starting bran material. The resulting second granulated product is then dried to a final residual water content of from 2% to 8%. As shown in the examples, this "double-extrusion" allows for a precise control of the texture of the resulting bran granulates, as indicated by their porosity, mean wall thickness and average area diameter.

The inventors have found that the bran granulates may be used as an agent for improving shelf-life of a food product, in particular double-extruded bran granulates. Without wishing to be bound by theory, the inventors believe this may be explained by two phenomena: a better exposure of ferulic acids from the bran structure and/or a better water absorption capacity of the bran granulates.

Ferulic acid is considered as an antioxidant compound. The physical and chemical structure of the bran fibres may be strongly disrupted by the double-extrusion process. This increases exposure of ferulic acid moieties in the bran, leading potentially to increase release of ferulic acid from the bran, thereby increasing the antioxidant properties of the double-extruded bran granulates. Therefore, the bran granulates may protect the food product against rancidity as illustrated by lower hexanal concentrations. Therefore, the incorporating the bran granulates into a food product could contributed to improving the shelf-life of the food product from the point of view of its flavour.

In addition, the double-extrusion process has an impact on porosity and wall thickness of the granulates. This may improve water absorption by the bran granulates, which may act as water scavengers, such as water vapour scavengers, during shelf life. This would be particularly interesting in the case of moisture-sensitive food products. Moisture-sensitive food products include powdered food products for instance, which could undergo caking in the presence of water vapour. Therefore, the incorporating the bran granulates into a food product, especially a dry powdered food product, could contribute to improving the shelf-life of a food product from the point of view of its physical stability.

This may be specially interesting in the context of using packaging materials which do not exhibit as good barrier properties as plastics, for instance against moisture or oxygen. Removing plastic from food packaging is an ongoing objective in the food industry. In particular, plastic packaging may be replaced with paper packaging. This option is considered because paper has good recycling channels and it is also well accepted by consumers. However, usually, paper packaging does not have as good moisture barrier properties as plastic packaging. Therefore, the shelf-life of a dry food product packaged in paper packaging may be shorter than the same dry food product packaged in a plastic packaging.

As explained above, the inventors have found that the bran granulates, especially double-extruded bran granulates, have interesting properties which may be linked to improved shelf-life. Therefore, the invention also relates to the use of the bran granulates described above as an agent for improving the shelf-life of a dry food product. In particular, this applies to a dry food product which is packaged in a packaging material without plastic, for instance paper. The bran granulates may be used as an antioxidant agent. It may also be used to protect a dry food from moisture uptake.

The invention also proposes a dry food composition which comprises bran granulates as described herein. The bran granulates may be used as an agent for improving the shelf-life of said dry food product. In an embodiment, the dry food composition comprises bran granulates as described herein. For instance, the dry food composition may be an infant cereal product, an adult cereal product, a dehydrated sauce, a dehydrated soup, a dehydrated dish, a reconstitutable beverage, or a dehydrated pet food. In such cases, the bran granulated may be dry-mixed with the other ingredients of the dry food composition. For instance, the dry food composition may comprise up to 15% by weight of bran granulate, such as from 0.1 to 15% by weight, or up to 12% by weight, or up to 10% by weight of bran granulate.

For instance, the dry food composition is ready for reconstitution into a porridge, simply by mixing a liquid with it. The liquid may be water or milk. It could also be a fruit juice. The liquid may be cold, for instance at a temperature from 3°C to 10°C, or warm, for instance at a temperature from 30°C to 80°C.

The dry food composition may comprise further ingredients selected from sugars, sweeteners, flavours, fruit powders, brans, fibres, gums, milk powders, vitamins, minerals, cocoa powder and any mixture thereof. If sugars are used, preferably, the added sugar is sucrose.

Fruit, vegetable and legumes may be interesting ingredients to provide colour, or flavour to the oat-based pieces. In addition, fruits, vegetables and legumes contain interesting dietary fibres, macronutrients, such as proteins, or phytonutrients, such a polyphenols. Preferably, fruits, vegetables and legumes are provided as dry powders or flours. For instance, the dry mix comprises from 5 to 30 wt% of fruit and/or vegetable powder.

Examples of fruits include apple, blackberry, cherry, date, grape, orange, passion fruit, pear, peach, pineapple, plum, raspberry, and strawberry. Examples of vegetables include artichoke, broccoli, carrot, cassava, cauliflower, courgette, pumpkin, spinach, sweet potato, or tomato. Examples of legumes include beans, chick peas, kidney beans, lentils, or peas. Combinations of several fruits, vegetables and/or legumes can be considered. Some of the fruits or vegetable ingredients may also contain starches.

Milk powder can be used as an ingredient of the dry food composition. Milk powder is useful to improve the protein content of the product. Examples of milk powders include powder made from milk, semi-skim milk, skim milk, milk proteins and combinations thereof. Examples of milk proteins are casein, caseinate, casein hydrolysate, whey, whey hydrolysate, whey concentrate, whey isolate, milk protein concentrate, milk protein isolate, and combinations thereof. Furthermore, the milk protein may be, for example, sweet whey, acid whey, α-lactalbumin, β-lactoglobulin, bovine serum albumin, acid casein, caseinates, α-casein, β-casein and/or γ-casein. For instance, the dry mix comprises from 5 to 40 wt% of milk powder.

Sweeteners include natural sweeteners and sugar substitutes. Examples of natural sweeteners include agave nectar, date sugar, fruit juice concentrate, honey, maple syrup, molasses. Examples of sugar substitutes include acesulfame potassium, aspartame, neotame, saccharin, sucralose, advantame, erythitol, hydrogenated starch hydrolysate, isomalt, lactitol, maltitol, mannitol, sorbitol, xylitol, stevia extracts, tagatose, trehalose. Preferably, artificial sweeteners are avoided. For instance, the dry food composition comprises up to 15 wt% of sweetener. For instance, the dry mix comprises from 3 to 15 wt% of sugar or other natural sweeteners, or an amount of sugar substitutes sufficient to provide an sweetness perception equivalent to 3 to 15 wt% of sugar. In any case, the amount of natural sweeteners and sugar substitutes should respect the applicable regulation.

The dry food composition may also comprise soluble or insoluble fibres. Preferably, fibres include beta-glucan, inulin and fructo-oligosaccharides. Fibres may be provided in the form of cereal bran for instance.

In addition, the dry food composition may also comprise vitamins, minerals and other nutrients including vitamin A, vitamin B1, vitamin B2, vitamin E, vitamin K, vitamin C, vitamin D, folic acid, inositol, niacin, biotin, pantothenic acid, choline, calcium, sodium, phosphorous, iodine, magnesium, copper, zinc, iron, manganese, chloride, potassium, selenium, chromium, molybdenum, taurine and L-carnitine. Minerals are usually in salt form. The presence and amount of the specific minerals and other vitamins may vary depending on the intended fortification and the targeted consumer. In any case, fortification levels should respect the applicable regulation. Fortification could be added in the dry mix prior to extrusion or directly into the extruder. Usually, the vitamins, minerals and other nutrients represent less than 2 wt% of the dry mix.

Those skilled in the art will understand that they can freely combine all features of the present invention disclosed herein. Further, features described for different embodiments of the present invention may be combined.

Furthermore, where known equivalents exist to specific features, such equivalents are incorporated as if specifically referred in this specification. Further advantages and features of the present invention are apparent from the figures and non-limiting examples.

**EXAMPLES - METHODS**

**Determination of the internal structure of granulates by microcomputed X-ray tomography and 3D image analysis**

*Images acquisition of granulates*

X-ray tomography scans are performed with a 1272 Skyscan MCT (Brüker MicroCT, Kontich, Belgium) with a X-ray beam of 40kV and 100μA. Scans are performed with the Skyscan software (version 1.1.9), reconstruction with the Skyscan NRecon software (version 1.6.10.4) with the InstaRecon program (version 2.03.5) and 3D image analysis with CTAn software (version 1.17.7.2, 64-bit).

Each bran granulate was placed in the X-ray tomography chamber. The image pixel size was 2μm, the source voltage was 50kV, the source current was 200uA and the camera had an exposure time of 650 ms. Scans were performed over 180°, with an angular step of 0.12° and a frame averaging of 3.

The reconstruction of the dataset was performed over 500 slices in average, with the settings contrast at 0.008-0.45. Smoothing and ring artefact reduction were set up at 1 and 1, respective ly.

*3D analysis of the images*

3D image analysis was performed on 2 μm per pixel reduced datasets over 500 slices. The analysis was performed in two steps: (i) a first step to select the bran granulates to be analysed by excluding the outer area surrounding the bran granulates, (ii) the second step to obtain the porosity of the bran granulates.

*(i) Selection of the particles, i.e. volume of interest:*

The images in grey levels were segmented. The segmentation was performed at a grey level of 40, and then images were cleaned by removing any single spots smaller than 2 pixels, and then dilated by mathematical morphology. The selection of the volume of interest was performed through the shrink-wrap function, and then this volume was eroded by mathematical morphology to adjust to the surface of the bran granulates. Dilation and erosion parameters were chosen in order to obtain the best adjustment to the surface of the particles.

*(ii) 3D image analysis:*

The images were reloaded and segmented at a grey level of 40. The porosity was then calculated as the ratio of the volume of voids in the granulates out of the granulates volume, the granulates volume being equal to the volume of interest defined above (i). The structure thickness gave the distribution of the wall thickness as well as the mean wall thickness, corresponding to the average of the distribution.

**Determination of the particles size of the bran granulates**

The particles size of the granulates was determined with the Zephyr instrument (Occhio). In this method, the granulates gently fall vertically in front of a high resolution camera: Each particle is detected by the camera. Then the particles are analysed by an image analysis software (Callisto). A representative volume of particles is analysed and represents usually from 20'000 to 50'000 particles.

From the particles size distribution curve, the average area diameter is obtained (D[4, 3]). The area diameter corresponds to the diameter of the equivalent sphere, having the surface of the particle.

**Reconstitution behavior assessed by RVA (Rapid Visco Analyzer)**

The reconstitution behavior of the bran granulates was assessed via viscosity of the products 2 minutes and 10 minutes after reconstitution. Viscosity is measured in a mix of 20% by weight of said granulates in 80% by weight of water, at 50°C, at a shear rate of 50 rpm, after 2 minutes (Visco2min) and 10 minutes (Visco10min) at this shear rate, with a rheometer comprising a canister equipped with a standard paddle, such as Rapid Visco Analyzer (Rapid Visco Analyzer, RVA 4500, Newport Scientific).

In practice, 5.9g of granulates are put in the RVA canister with 22.6g of water heated at 50°C, leading to a total solids of the mix of 20%. The bran granulates and water mix was then stirred manually for 10s in order to put the granulates and water in contact, then stirred in the RVA canister with the paddles at 50 RPM for 10 min at 50°C.

From the curves viscosity versus time obtained with the RVA, The viscosity of the rehydrated bran granulates was obtained at 2 min and at 10 min, Visco2min and Visco10min respectively. The ratio Visco10min / Visco2min describes the behaviour of the bran granulates upon reconstitution. When the ratio is higher than 1, i.e. Visco10min > Visco2min, viscosity increases over time. When the ratio is lower than or equal to 1, it may be assumed that the viscosity reached within 2 minutes after rehydration remains stable over time, or maybe decreases slightly over time, possibly due to the shear of the paddle during the measurement. In other words, the bran viscosity is already fully built at 2 minutes after rehydration. This is an important feature for products which consumers want to prepare quickly.

**Determination of ferulic acid**

Analysis of free ferulic acid was performed based on the published Healthgrain method (Li L. et al. 2008. Phenolic acids in wheat varieties in the HEALTHGRAIN diversity screen. Journal of Agricultural and Food Chemistry 56, 9732-9739). A 50 mg aliquot of sample was weighted in an Eppendorf tube. Preparations were done in duplicate. The samples were then mixed with 1.5 mL of methanol 70% and thoroughly vortexed and sonicated during 10 min. Samples were then centrifuged (5 min at 5000 rpm) and the supernatant kept in a clean new tube. The aliquot was re-extracted with 1.5 mL of fresh methanol 70% two times and the three supernatant were pooled, constituting the free ferulic acid extract. An internal standard (3, 5-dichloro-4-hydroxybenzoic acid) was then added for further quantification before concentration of the extract by evaporation overnight. The viscous residue obtained was solubilized in methanol 40% and centrifuged 1h at 14'500 rpm using an Amicon Eppendorf equipped with an internal filter. The clean supernatant was filtered again (40 um) and finally transferred in a vial before analysis.

Extracts were analysed with High Performance Liquid Chromatography on an XBridge reverse phase column (C18 3.5 $\mu$m, 3.0*150.0 mm, Waters). Phenolic acids were separated using increasing concentration of acetonitrile and identified with retention times of commercial standards. UV-Detection was performed at 320 nm for ferulic acid and quantification done by determining response of the ferulic acid standard to the internal standard added during sample preparation.

**Determination of hexanal**

Content of aroma compounds was determined using Head Space Solid Phase Micro Extraction in combination with Gas Chromatography and tandem Mass Spectrometry (HS-SPME-GC/MS/MS). Quantification was accomplished by Stable Isotope Dilution Assay (SIDA).

The sample (1 g $\pm$ 0.002 g) was weighed into a 20 mL headspace vial. Ultrapure water (10 mL) and methanol solution of internal standards (20 $\mu$L) were added together with a magnetic stir bar. The vial was closed with a screw cap and the mixture was homogenized by means of a vortex agitator for 5 s and then stirred for 15 min using a magnetic stirrer. The mixture was then centrifuged at 4000 rpm for 3 min and an aliquot of supernatant (5 mL) was transferred into a new 20 mL headspace vial and analysed by HS-SPME-GC/MS/MS. Each sample was prepared in duplicates by two independent work-ups.

For HS-SPME, the incubation (5 min) and extraction (30 min) were performed at 70°C. DVB-CAR-PDMS fibre of 2 cm (Supelco) was used for the extraction under agitator speed of 500 rpm. The fibre was injected into a GC-MS/MS instrument and aroma compounds were desorbed in split mode (ratio 5:1) at 250°C for 5 min.

For GC/MS/MS, an Agilent 7890A gas chromatograph and Agilent 7000 triple quadrupole mass spectrometer with chemical ionization source (CI) were used. Methane was used as a reactant gas. Gas chromatographic separations were achieved on a DB-624-UI column 60 m x 0.25 mm internal diameter, film thickness 1.4 $\mu$m (J&W Scientific). The temperature program of the oven started at 50°C; the temperature increased at a rate of 5°C/min up to 200°C, then at a rate of 30°C/min up to 250°C and then maintained constant for 10 min. Helium was used as a carrier gas with a constant flow of 1.0 mL/min.

The analytes were identified by comparing their retention times and fragmentation patterns with corresponding standards. The concentrations were calculated from the abundances (peak areas) of the ions selected for the analytes and the internal standards and from the amounts of added internal standards. The quantities of the internal standards were adjusted to obtain a peak area ratio of analyte/standard between 0.2 and 5. The ions (transitions) used for the quantification by stable isotope dilution assay are listed together with applied collision energies in Table 1.

Table 1: Selected ions used for the quantification of aroma compounds by means of stable isotope dilution assays

| Compound | Precursor ion (m/z) | Product ion (m/z) | Collision energy (V) |
|---|---|---|---|
| hexanal | 83 | 55 | 10 |
| $[^2H_3]$-hexanal | 86 | 57 | 10 |

**Extrusion conditions**

Two types of well-known twin-screw extruders are used in the examples, namely models BC 21 and BC 45, both from CLEXTRAL (France).

A bran composition as shown in the examples below is fed into a twin-screw extruder (Clextral BC45) with 7 barrels (total length of 1400mm). The screw configuration is shown in Table 2. This screw configuration is used to apply a mechanical energy which is sufficient to shear the bran composition.

Water is added in the extruder to reach a water content of the dough from 19% to 30% inside the extruder. For easier extrusion, bran are pre-conditioned with added water at a level of 1.5kg per 5kg of bran, for example.

The temperature profile is for example 20°C/90°C/105°C/135°C/135°C/115°C in the successive barrels, in order to cook the bran. The screw speed is 340 RPM. The bran dough reaches a temperature of 120°C to 150°C at the extrusion. The extruded bran is cut with the turbine, as shown from example 2. The turbine has a diameter of 114 mm, with 36 fins. The humidity of the extruded bran is from 6 to 12%. A drying step allows reducing the humidity of the extruded bran granulates down to 1 to 3%.

Table 2: Screw configuration

| Length (mm) | Pitch (mm) | Flight |
|---|---|---|
| 12 | | Ring |
| 200 | 66 | C2F |
| 100 | 50 | C2F |
| 50 | 33 | C2F |
| 150 | 50 | C2F |
| 75 | 50 | C2F |
| 12.5 | | INO |
| 100 | 25 | C1F |
| 50 | -25 | CF1C |
| 50 | -25 | CF1C |
| 100 | 33 | C1F |
| 100 | 5/4 | MEL |
| 50 | -25 | CF1C |
| 100 | 50 | C1F |
| 50 | -25 | CF1C |
| 100 | -25 | CF1C |
| 100 | 50 | C1F |
| Total 1400 | L/D = | 25.23 |

**Example 1: Comparative example: extruded milled bran**

Bran is extruded in the shape of a rope, without cutting, according to the extrusion conditions of the Table 3.1 below. The rope of extruded bran is then milled into granulates with a Frewitt mill, with a square mesh size of 1.5 mm, wire of 1mm and a rotation speed of 0.74 RPM, in order to reach the same range of granulates size as the granulates according to the invention. These extrusion conditions are rather standard conditions. In particular, they extrudate is not cut with the granulating turbine disclosed herein.

Table 3.1. Extrusion conditions. In example B, * is for the second round of extrusion. In example B, the material obtained after the first extrusion and milling is extruded and milled a second time ("double extrusion and milling") using the screw configuration described in Table 2 and the extrusion conditions identified by an asterisk * in Table 3.1.

| Example | | A | B |
|---|---|---|---|
| **RECIPE** | **Unit** | **Single extrusion and milling** | **Double extrusion and milling** |
| Wheat bran | % wt | 100 | 100 |
| **EXTRUSION** | | | |
| Extruder type | | BC21 | BC21 |
| Product temperature | °C | 130 | 130 / 120* |
| Screw speed | RPM | 310 | 310 / 310* |
| Water in the extruder | % | 25.5 | 25.5 / 25.6* |
| **CUTTING** | | **No cutting** | **No cutting** |
| Number of die(s) | | 1 | 1/1* |
| Die diameter | mm | 3 | 3/3* |
| Total flow rate | Kg/h | 8.6 | 8.6 / 9.3 * |
| **FIGURE** | | **1 and 2** | **3** |

Table 3.2. Measures

| Example | Unit | A | B |
|---|---|---|---|
| Average area diameter | $\mu$m | 806 | 990 |
| Visco10min/Visco2min | | 1.8 | 0.79 |
| Porosity | % | 17.6 | 26.9 |
| Mean wall thickness | $\mu$m | 32 | 26.5 |

Bran granulates of product B, which are extruded twice, have a lower Visco10/Visco2 than bran granulates of example A. This result can be related to the structure of the granulates: bran granulates B are more porous with thinner walls than bran granulates A. When performing extrusion and milling of bran, a second extrusion is preferable in order to obtain good reconstitution properties of the bran.

Moreover, the texture of the double extruded milled bran (B) was assessed in comparison to the extruded milled bran (A) during a technical tasting, after reconstitution of the bran in liquid. The double extruded milled bran were clearly smoother and much less gritty.

**Example 2: Direct bran granulates**

Direct bran granulates may be prepared using the screw configuration described in Table 2, with the extrusion conditions and the cutting conditions described in Table 4.1.

Table 4.1.

| Example | | C | D | E |
|---|---|---|---|---|
| **RECIPE** | **Unit** | **Direct bran granulates** | **Direct bran granulates** | **Direct bran granulates** |
| Wheat bran | % wt | 100 | 100 | |
| Corn bran | % wt | | | 80 |

(continued)

| Example | Unit | C | D | E |
|---|---|---|---|---|
| **RECIPE** | Unit | Direct bran granulates | Direct bran granulates | Direct bran granulates |
| Corn semolina | % wt | | | 20 |
| **EXTRUSION** | | | | |
| Water addition (preconditioning) | | 1.5 kg water for 5kg bran | 1.5 kg water for 5kg bran | 1.2kg water for 5kg mix |
| Extruder type | | BC 21 | BC 21 | BC21 |
| Product temperature | °C | 140 | 133 | 129 |
| Screw speed | RPM | 350 | 350 | 500 |
| Water in the extruder | % | 27 | 27 | 24.7 |
| **CUTTING** | | **with granulating turbine** | | |
| Number of die(s) | | 1 | 1 | 1 |
| Die diameter | mm | 3 | 3 | 3 |
| Total flow rate | Kg/h | 7.5 | 7.5 | 7.5 |
| Flow rate per die | Kg/h | 7.5 | 7.5 | 7.5 |
| Cutting speed | RPM | 13000 | 18000 | 13000 |
| Number of fins of turbine | | 36 | 36 | 36 |
| Vtur | m.s 1 | 77.6 | 107.5 | 77.6 |
| Lpr | mm | 0.055 | 0.040 | 0.040 |
| **FIGURE** | | **4** | **5** | - |

Table 4.2.

| Example | Unit | C | D | E |
|---|---|---|---|---|
| Average area diameter | $\mu$m | 456 | 416 | 658 |
| Visco10min/Visco2min | min | 0.98 | 0.97 | 0.45 |
| Porosity | % | 36 | 35 | 52.1 |
| Mean wall thickness | $\mu$m | 13.4 | 12.8 | 10.1 |

Bran granulates of examples C, D, E made with the turbine all have a ratio Visco10/Visco2 $\leq$ 1. Their porosities are higher than example A and B, and mean wall thickness is lower. The good reconstitution properties of the extruded bran granulates of our invention, in comparison to the corresponding extruded milled bran (example A), may be explained mainly by the higher porosity of the bran granulates and their lower mean wall thickness. The bran granulates C, D and E also have a smaller average area diameter (particle size).

Moreover, the texture of the direct bran granulates (C, D) was assessed in comparison to the extruded milled bran (A) during a technical tasting. Direct bran granulates obtained with the turbine were clearly less gritty and smoother when reconstituted in a liquid.

**Example 3 : Direct bran granulates with double extrusion**

Table 5.1. (*) conditions of the second extrusion. After the first extrusion and cutting, the product is not dried and is used as such for the second extrusion and cutting. The water content in the bran after the first extrusion is from 10 to 15%.

| Example | | F | G |
|---|---|---|---|
| **RECIPE** | **Unit** | **Direct bran granulates** | **Direct bran granulates** |
| Wheat bran | % wt | | 100 |
| Corn bran | % wt | 80 | |
| Corn semolina | % wt | 20 | |
| **EXTRUSION** | | | |
| Water addition (preconditioning) | | 1.2kg water + 5kg mix / None* | 1.4kg water + 5kg mix/ None* |
| Extruder type | | BC21 | BC21 |
| Product temperature | °C | 130 / 133* | 126 / 125* |
| Screw speed | RPM | 500 / 500* | 310 / 410* |
| Water in the extruder | % | 25.7 / 20.7* | 27 / 20.5* |
| **CUTTING** | | **with granulating turbine** | |
| Number of die(s) | | 1 | 1 |
| Die diameter | mm | 3 | 3 |
| Total flow rate | Kg/h | 7.5 / 7.5 * | 7.5 / 9 * |
| Flow rate per die | Kg/h | 7.5 / 7.5 * | 7.5/9* |
| Cutting speed | RPM | 13000 / 13000* | 13000 / 13000* |
| Number of fins of turbine | | 36 / 36* | 36 / 36* |
| Vtur | m.s$^{-1}$ | 77.6 / 77.6* | 77.6 / 77.6* |
| Lpr | mm | 0.055 / 0.055* | 0.055 / 0.066 |
| **FIGURE** | | **6** | - |

Table 5.2. Measurements

| Example | Unit | F | G |
|---|---|---|---|
| Average area diameter | μm | 727 | 702 |
| Visco10min/Visco2min | min | 0.77 | 0.97 |
| Porosity | % | 42.4 | 45.3 |
| Mean wall thickness | μm | 10.4 | 9.9 |

Double-extruded bran granulates deliver good reconstitution properties, with Visco10/Visco2 ≤ 1. The second extrusion step delivers bran granulates with even higher porosity and thinner walls. Upon technical tasting, the double extruded bran granulates are perceived even less gritty and smoother.

The bran granulates of examples 3 and 4 are "direct" granulates, meaning that they are cut directly at the outlet of the extruder to their final size, with the need for a specific milling as in Example 1. When comparing single-extrusion (example 2) with double extrusion (example 3), it seems that double-extrusion (together with direct cutting) provides a more specific range of textures, as indicated by the porosity, mean wall thickness and average area diameter, despite their different recipes (full bran, or bran mixed semolina). In particular, double-extruded direct-cut bran granulates exhibit a porosity from 41% to 49%, preferable from 41% to 46%, a mean wall thickness from 9 to 11 μm and an average area diameter (D[4, 3]) from 690 to 750 μm, preferably from 700 to 730 μm.

**Examples 4: Direct bran granulates of mixed bran and scaling-up**

Single-extruded direct-cut bran granulates may be prepared using the screw configuration described in Table 2, with the extrusion conditions and the cutting conditions described in Table 6.1.

Table 6.1

| Example | | H | I |
|---|---|---|---|
| **RECIPE** | **Unit** | **Direct bran granulates** | **Direct bran granulates** |
| Corn bran | %wt | 50 | 50 |
| Oat bran | %wt | 50 | 50 |
| **EXTRUSION** | | | |
| Water addition (preconditioning) | | 1.2kg water + 5kg mix | No |
| Extruder type | | BC21 | BC45 |
| Product temperature | °C | 126 | 144 |
| Screw speed | RPM | 500 | 340 |
| Water in the extruder | % | 24.8 | 19.1 |
| **CUTTING** | | **with granulating turbine** | |
| Number of die(s) | | 1 | 4 |
| Die diameter | mm | 3 | 3 |
| Total flow rate | Kg/h | 7.5 | 90 |
| Flow rate per die | Kg/h | 7.5 | 22.5 |
| Cutting speed | RPM | 13000 | 13000 |
| Number of fins of turbine | | 36 | 36 |
| Vtur | m.s$^{-1}$ | 77.6 | 77.6 |
| Lpr | mm | 0.055 | 0.080 |

Table 6.2. Measurements

| Example | Unit | H | I |
|---|---|---|---|
| Average area diameter | μm | 881 | 630 |
| Visco10min/Visco2min | min | 0.97 | 0.93 |
| Porosity | % | 38.2 | - |
| Mean wall thickness | μm | 12.4 | - |

Example I is the up-scaled version of example H. The total flowrate is 90kg/h for example I while it is 7.5 kg/h for example H. Both granulates from examples I and H present good reconstitution properties, with Visco10/Visco2 $\leq$ 1. Thus, the production of direct bran granulates can be scaled-up. It also works for industrial flowrate, for example 1000 kg/h, with a higher numbers of die (for example 50). This leads to a flow rate per die of 20 kg/h.

**Examples 5: Determination of shelf-life**

*Wafer preparation*

Wafers are used as a model for evaluating the impact on shelf life of various ingredients. The extruded bran prepared as described in Examples C, E, F and G were added in wafer preparation in order to evaluate their potential to modulate rancidity development in a model cereal matrix. A reference wafer with addition of the native (non-extruded) bran was also prepared. Batters were prepared with the following formulation:

Table 7. Wafer recipes

| Ingredient | Wafer A (g/batter) | Wafer B (g/batter) |
|---|---|---|
| Refined wheat flour | 61.05 | 61.05 |
| Extruded wheat/corn bran | 10.77 | |
| Native wheat/corn bran | | 10.77 |
| Water | 75.00 | 75.00 |
| Fat | 3.00 | 3.00 |
| Sodium bicarbonate | 0.18 | 0.18 |
| Total | 150.0 | 150.0 |

The ratio of bran (extruded or native)/refined flour is set at 15:85 to reflect the natural proportion of bran in whole grain flour. Wafers (9-11 g each) were prepared by baking at 160°C for 110 s using laboratory equipment for production of wafer sheets (Hebenstreit).

***Accelerated storage test***

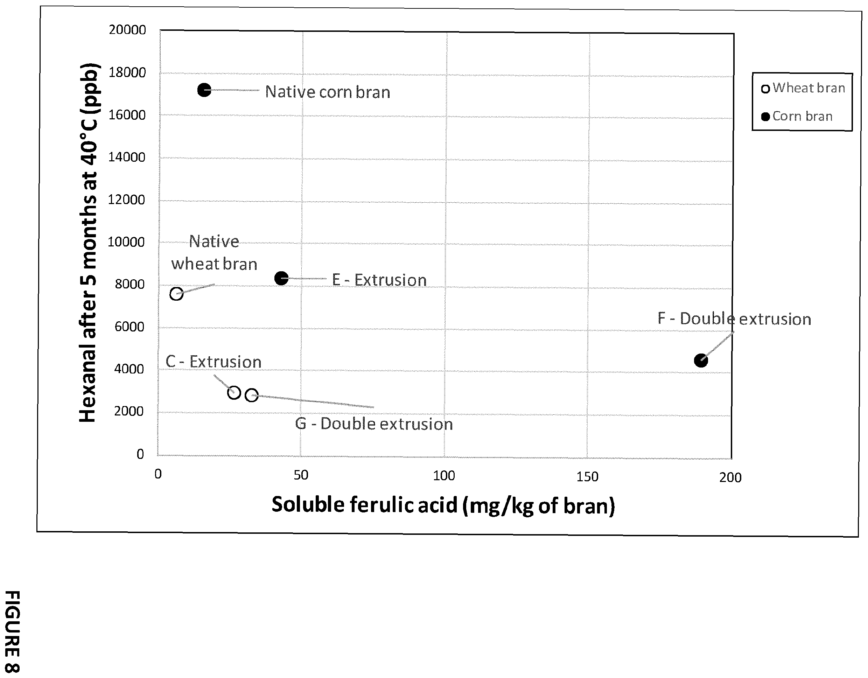

The wafers were ground using a coffee grinder (Tristar) and ground wafers were subjected to an accelerated storage test. 5 g of ground wafer in 50 mL closed Pyrex bottle were stored in an oven at 40°C for 5 months in replicates. After storage, hexanal (marker of lipid oxidation) was determined in both samples. Results are shown on figure 8.

The hexanal content was reduced by more than half in the samples containing extruded bran rather than native bran, both for wheat bran and corn bran. The soluble ferulic acid was higher in the extruded bran than in the native bran, less for wheat bran than for corn bran.

This shows that extruded bran, in particular double-extruded corn bran, may be used as an agent for improving shelf-life of a dry food product, for instance as an antioxidant agent.

Although the invention has been described by way of example, it should be appreciated that variations and modifications may be made without departing from the scope of the invention as defined in the claims.

**Claims**

1. Bran granulates having an average area diameter D[4, 3] of from 200 to 1500 $\mu$m, a porosity of from 35% to 55%, a mean wall thickness of from 9 to 20 $\mu$m, the mean wall thickness being the average thickness of pores of granulates as measured using x-ray tomography, and having a viscosity ratio Visco10min/ Visco2min $\leq$ 1, said granulates comprising at least 50% by weight of bran, preferably at least 80% by weight of bran, and wherein the bran is cereal bran or pseudo-cereal bran, and wherein the granulates consist of 100% dry matter by weight of bran, wherein the Viscosity is measured in a mix of 20% by weight of said granulates in 80% by weight of water, at 50°C, at a shear rate of 50 rpm, after 2 minutes (Visco2min) and 10 minutes (Visco10min) at this shear rate, with a rheometer comprising a canister equipped with a standard paddle.

2. The granulates according to claim 1, wherein the granulates have:

   - an average area diameter D[4, 3] of from 300 to 1000 $\mu$m, preferably from 400 to 900 $\mu$m,
   - a porosity of from 36% to 39%, or from 41% to 49%, preferably 41% to 46%, or from 51% to 55%,
   - a mean wall thickness of from 9 to 15 $\mu$m, preferably from 9 to 13 $\mu$m, more preferably from 9 to 11 $\mu$m.

3. The granulates according to any one of claims 1 to 2, wherein the bran is cereal bran or pseudo-cereal bran selected from wheat bran, corn bran, oat bran, sorghum bran, millet bran, barley bran, or mixtures thereof.

4. The granulates according to any one of claims 1 to 3, which are obtainable by a cooking-extrusion process, preferably a double cooking-extrusion process, most preferably a process that does not comprise a milling step downstream of the cutting step.

5. A dry food composition which comprises bran granulates according to any one of claims 1 to 4, wherein the dry food composition is an infant cereal product, an adult cereal product, a dehydrated sauce, a dehydrated soup, a dehydrated dish, a reconstitutable beverage, or a dehydrated pet food.

6. A dry food composition according to claim 5, wherein said granulates are used as an agent for improving shelf-life of said food product.

7. The use of the bran granulates according to any one of claims 1 to 6, as an agent for improving shelf-life of a dry food product.

8. The use according to claim 7, wherein said dry food product is a packaged dry food product, and wherein the packaging material does not comprise plastic, preferably wherein the packaging material is paper.

9. The use according to claim 7 or 8, wherein said bran granulates are used as an antioxidant agent.

10. The use according to any one of claims 7 to 9, wherein said bran granulates are used to protect said dry food from moisture uptake.

11. A process for manufacturing bran granulates according to any one of claims 1 to 4, which comprises:

(a) mixing a bran material with water in an extruder to form a dough comprising 100% by weight of bran material;
(b) cooking the dough in the extruder at a temperature comprised from 110°C to 160°C and at a water content comprised between 20% and 40% by weight of the dough;
(c) extruding the dough through an extrusion die (2);
(d) cutting the dough into granulates directly at the outlet of the extrusion die (2), at a turbine cutting speed Vtur of between 20 m/s and 120 m/s and at an extrudate length Lpr of between 0.05 mm and 0.5 mm with a rotationally-driven granulating turbine (5), to obtain a first granulated product; and
(e) drying the granulated product to a water content below 8%.

12. The process according to claim 11, wherein steps (b), (c) and (d) are repeated to the first granulated product before drying, to obtain a second granulated product, and the second granulated product is dried to a water content below 8%.

13. The process according to claim 11 or 12, wherein the bran dough comprises at least 80% by weight of bran material, preferably wherein the dough consists of bran material and water.

**Patentansprüche**

1. Kleiegranulate, die einen durchschnittlichen Flächendurchmesser D[4, 3] von 200 bis 1500 $\mu$m, eine Porosität von 35 % bis 55 %, eine mittlere Wanddicke von 9 bis 20 $\mu$m aufweisen, wobei die mittlere Wanddicke die durchschnittliche Dicke von Poren von Granulaten ist, wie unter Verwendung von Röntgentomografie gemessen, und die ein Viskositätsverhältnis Visko10min / Visko2min $\leq$ 1 aufweisen, die Granulate umfassend zu mindestens 50 Gew.-% Kleie, vorzugsweise zu mindestens 80 Gew.-% Kleie, und wobei die Kleie Getreidekleie oder Pseudogetreidekleie ist und wobei die Granulate aus zu 100 Gew.-% Trockenmasse an Kleie bestehen, wobei die Viskosität in einer Mischung von zu 20 Gew.-% die Granulate in zu 80 Gew.-% Wasser, bei 50 °C, bei einer Scherrate von 50 U/min, nach 2 Minuten (Visko2min) und 10 Minuten (Visko10min) bei dieser Scherrate gemessen wird, mit einem Rheometer, umfassend einen Kanister, der mit einem Standardpaddel ausgestattet ist.

2. Granulate nach Anspruch 1, wobei die Granulate aufweisen:

- einen durchschnittlichen Flächendurchmesser D[4, 3] von 300 bis 1000 $\mu$m, vorzugsweise von 400 bis 900 $\mu$m,
- eine Porosität von 36 % bis 39 % oder von 41 % bis 49 %, vorzugsweise 41 % bis 46 % oder von 51 % bis 55 %,
- eine mittlere Wanddicke von 9 bis 15 $\mu$m, vorzugsweise von 9 bis 13 $\mu$m, mehr bevorzugt von 9 bis 11 $\mu$m.

3. Granulate nach einem der Ansprüche 1 bis 2, wobei die Kleie Getreidekleie oder Pseudogetreidekleie ist, die aus Weizenkleie, Maiskleie, Haferkleie, Sorghumkleie, Hirsekleie, Gerstenkleie oder Gemischen davon ausgewählt ist.

4. Granulate nach einem der Ansprüche 1 bis 3, die durch ein Kochextrusionsverfahren, vorzugsweise ein Doppelkochextrusionsverfahren, am meisten bevorzugt ein Verfahren, das keinen Mahlschritt nachgeschaltet des Schneidschritts umfasst, erhältlich sind.

5. Trockennahrungsmittelzusammensetzung, die Kleiegranulate nach einem der Ansprüche 1 bis 4 umfasst, wobei die Trockennahrungsmittelzusammensetzung ein Getreideprodukt für Säuglinge, ein Getreideprodukt für Erwachsene, eine dehydrierte Soße, eine dehydrierte Suppe, ein dehydriertes Gericht, ein rekonstituierbares Getränk oder ein dehydriertes Heimtiernahrungsmittel ist.

6. Trockennahrungsmittelzusammensetzung nach Anspruch 5, wobei die Granulate als ein Mittel zum Verbessern einer Haltbarkeit des Nahrungsmittelprodukts verwendet werden.

7. Verwendung der Kleiegranulate nach einem der Ansprüche 1 bis 6 als ein Mittel zum Verbessern der Haltbarkeit eines Trockennahrungsmittelprodukts.

8. Verwendung nach Anspruch 7, wobei das Trockennahrungsmittelprodukt ein verpacktes Trockennahrungsmittelprodukt ist und wobei das Verpackungsmaterial keinen Kunststoff umfasst, vorzugsweise wobei das Verpackungsmaterial Papier ist.

9. Verwendung nach Anspruch 7 oder 8, wobei die Kleiegranulate als ein Antioxidationsmittel verwendet werden.

10. Verwendung nach einem der Ansprüche 7 bis 9, wobei die Kleiegranulate verwendet werden, um das Trockennahrungsmittel vor einer Feuchtigkeitsaufnahme zu schützen.

11. Verfahren zum Herstellen von Kleiegranulaten nach einem der Ansprüche 1 bis 4, das umfasst:

(a) Mischen eines Kleiematerials mit Wasser in einem Extruder, um einen Teig, umfassend zu 100 Gew.-% Kleiematerial, auszubilden;
(b) Kochen des Teigs in dem Extruder bei einer Temperatur, die von 110 °C bis 160 °C beträgt, und bei einem Wassergehalt, der zwischen 20 Gew.-%und 40 Gew.-% des Teigs beträgt;
(c) Extrudieren des Teigs über eine Extrusionsdüse (2);
(d) Schneiden des Teigs in Granulate direkt an dem Auslass der Extrusionsdüse (2), bei einer Turbinenschneidgeschwindigkeit Vtur zwischen 20 m/s und 120 m/s und bei einer Extrudatlänge Lpr zwischen 0,05 mm und 0,5 mm mit einer drehangetriebenen Granulierturbine (5), um ein erstes granuliertes Produkt zu erhalten; und
(e) Trocknen des granulierten Produkts auf einen Wassergehalt unter 8 %.

12. Verfahren nach Anspruch 11, wobei Schritte (b), (c) und (d) an dem ersten granulierten Produkt vor dem Trocknen wiederholt werden, um ein zweites granuliertes Produkt zu erhalten, und das zweite granulierte Produkt auf einen Wassergehalt unter 8 % getrocknet wird.

13. Verfahren nach Anspruch 11 oder 12, wobei der Kleiteig zu mindestens 80 Gew.-% Kleiematerial umfasst, vorzugsweise wobei der Teig aus Kleiematerial besteht und Wasser.

## Revendications

1. Granulés de son ayant un diamètre de surface moyen D[4, 3] allant de 200 à 1 500 $\mu$m, une porosité allant de 35 % à 55 %, une épaisseur de paroi moyenne allant de 9 à 20 $\mu$m, l'épaisseur de paroi moyenne étant l'épaisseur moyenne de pores de granulés telle que mesurée à l'aide d'une tomodensitométrie, et ayant un rapport de viscosité Visco10min/Visco2min $\leq$ 1, lesdits granulés comprenant au moins 50 % en poids de son, de préférence au moins 80 % en poids de son, et dans lesquels le son est du son de céréale ou du son de pseudo-céréale, et dans lequel les granulés sont constitués de 100 % de matière sèche en poids de son, dans lesquels la viscosité est mesurée dans un mélange de 20 % en poids desdits granulés dans 80 % en poids d'eau, à 50 °C, à un taux de cisaillement de 50 tr/min, après 2 minutes (Visco2min) et 10 minutes (Visco10min) à ce taux de cisaillement, avec un rhéomètre comprenant une boîte équipée d'une palette standard.

2. Granulés selon la revendication 1, les granulés ayant :

- un diamètre de surface moyen D[4, 3] allant de 300 à 1 000 $\mu$m, de préférence de 400 à 900 $\mu$m,

- une porosité allant de 36 % à 39 %, ou de 41 % à 49 %, de préférence de 41 % à 46 %, ou de 51 % à 55 %,
- une épaisseur de paroi moyenne allant de 9 à 15 μm, de préférence de 9 à 13 μm, plus préférablement de 9 à 11 μm.

3. Granulés selon l'une quelconque des revendications 1 à 2, dans lesquels le son est du son de céréale ou du son de pseudo-céréale choisi parmi le son de blé, le son de maïs, le son d'avoine, le son de sorgho, le son de millet, le son d'orge, ou des mélanges de ceux-ci.

4. Granulés selon l'une quelconque des revendications 1 à 3, qui peuvent être obtenus par un procédé de cuisson-extrusion, de préférence un procédé de cuisson-extrusion double, le plus préférablement un procédé qui ne comprend pas d'étape de broyage en aval de l'étape de découpe.

5. Composition alimentaire sèche qui comprend des granulés de son selon l'une quelconque des revendications 1 à 4, dans laquelle la composition alimentaire sèche est un produit de céréale pour nourrisson, un produit de céréale pour adulte, une sauce déshydratée, une soupe déshydratée, un plat déshydraté, une boisson pouvant être reconstituée ou un aliment déshydraté pour animal de compagnie.

6. Composition alimentaire sèche selon la revendication 5, dans laquelle lesdits granulés sont utilisés en tant qu'agent pour améliorer la durée de conservation dudit produit alimentaire.

7. Utilisation des granulés de son selon l'une quelconque des revendications 1 à 6, en tant qu'agent pour améliorer la durée de conservation d'un produit alimentaire sec.

8. Utilisation selon la revendication 7, dans laquelle ledit produit alimentaire sec est un produit alimentaire sec emballé, et dans laquelle le matériau d'emballage ne comprend pas de plastique, de préférence dans laquelle le matériau d'emballage est du papier.

9. Utilisation selon la revendication 7 ou 8, dans laquelle lesdits granulés de son sont utilisés en tant qu'agent antioxydant.

10. Utilisation selon l'une quelconque des revendications 7 à 9, dans laquelle lesdits granulés de son sont utilisés pour protéger ledit aliment sec de l'absorption d'humidité.

11. Procédé de fabrication de granulés de son selon l'une quelconque des revendications 1 à 4, qui comprend :

(a) le mélange d'un matériau de son avec de l'eau dans une extrudeuse pour former une pâte comprenant 100 % en poids de matériau de son ;
(b) la cuisson de la pâte dans l'extrudeuse à une température comprise entre 110 °C et 160 °C et à une teneur en eau comprise entre 20 % et 40 % en poids de la pâte ;
(c) l'extrusion de la pâte par une filière d'extrusion (2) ;
(d) la découpe de la pâte en granulés directement à la sortie de la filière d'extrusion (2), à une vitesse de découpe de turbine Vtur comprise entre 20 m/s et 120 m/s et à une longueur d'extrudat Lpr comprise entre 0,05 mm et 0,5 mm avec une turbine de granulation (5) entraînée en rotation, pour obtenir un premier produit granulé ; et
(e) le séchage du produit granulé à une teneur en eau inférieure à 8 %.

12. Procédé selon la revendication 11, dans lequel les étapes (b), (c) et (d) sont répétées sur le premier produit granulé avant séchage, afin d'obtenir un second produit granulé, et le second produit granulé est séché à une teneur en eau inférieure à 8 %.

13. Procédé selon la revendication 11 ou 12, dans lequel la pâte de son comprend au moins 80 % en poids de matériau de son, de préférence dans lequel la pâte est constituée de matériau de son et l'eau.

1A

1B

**FIGURE 1**

FIGURE 2

FIGURE 3

FIGURE 4

FIGURE 5

**FIGURE 6**

**FIGURE 7**

FIGURE 8

**FIGURE 9 (prior art)**

**FIGURE 10**

**FIGURE 11**

**FIGURE 12**

**FIGURE 13**

**FIGURE 14**

**FIGURE 15**

**FIGURE 16**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009053379 A1
- US 7524178 B
- US 4044159 A
- EP 3079494 A
- EP 3073841 A
- EP 19151502 A

**Non-patent literature cited in the description**

- **LI L. et al.** Phenolic acids in wheat varieties in the HEALTHGRAIN diversity screen. *Journal of Agricultural and Food Chemistry,* 2008, vol. 56, 9732-9739